# EUROPÄISCHE PATENTSCHRIFT

(11) **EP 1 567 390 B1**
(45) Veröffentlichungstag und Bekanntmachung des Hinweises auf die Patenterteilung: **10.01.2007**
(21) Anmeldenummer: 03767450.4
(22) Anmeldetag: 26.11.2003
(51) Int. Cl.: B60R 1/12, B60Q 1/26, F21S 8/10

(54) **AUSSENRÜCKBLICKSPIEGEL FÜR FAHRZEUGE**
EXTERIOR REARVIEW MIRROR FOR VEHICLES
RETROVISEUR EXTERIEUR DESTINE A DES VEHICULES

(30) Priorität: 02.12.2002 DE 10256197
(43) Veröffentlichungstag der Anmeldung: 31.08.2005
(73) Patentinhaber: Schefenacker Vision Systems Germany GmbH, 71409 Schwaikheim (DE)
(72) Erfinder: FURTWÄNGLER, Martin, 71735 Eberdingen-Nussdorf (DE)
(74) Vertreter: Jackisch-Kohl, Anna-Katharina
(86) Internationale Anmeldenummer: PCT/DE2003/003904
(87) Internationale Veröffentlichungsnummer: WO 2004/050428

(56) Entgegenhaltungen:
- WO-A-02/08015
- US-A- 1 814 728
- US-B1- 6 227 689

## Beschreibung

Die Erfindung betrifft einen Außenrückblickspiegel für Fahrzeuge, insbesondere Kraftfahrzeuge, nach dem Oberbegriff des Anspruches 1.

Es sind Außenrückblickspiegel bekannt (z.B. aus der gattungsgemässen WO 02/08015 A), bei denen am Spiegelfuß eine Umfeldleuchte vorgesehen ist, die wenigstens ein Leuchtmittel enthält. Die Leuchtmittel haben LEDs, die auf einer Platine sitzen, die in ein Gehäuse eingesetzt ist, das seinerseits im Spiegelfuß gehalten wird. Die Leuchtmittel entwickeln eine relativ starke Wärme, die zu einer Beschädigung der Umfeldleuchte und/oder des Außenrückblickspiegels führen kann.

Der Erfindung liegt die Aufgabe zugrunde, den gattungsgemäßen Außenrückblickspiegel so auszubilden, daß sich die vom Leuchtmittel erzeugte Wärme nicht nachteilig auswirkt.

Diese Aufgabe wird beim gattungsgemäßen Außenrückblickspiegel erfindungsgemäß mit den kennzeichnenden Merkmalen des Anspruches 1 gelöst.

Infolge der erfindungsgemäßen Ausbildung wird die vom Leuchtmittel erzeugte Wärme vom metallischen Wärmeleiter des Trägers unmittelbar auf den Spiegelfuß übertragen. Dadurch kann auf einfache Weise eine übermäßige Erwärmung der Umfeldleuchte und des Spiegelfußes vermieden werden.

Weitere Merkmale der Erfindung ergeben sich aus den weiteren Ansprüchen, der Beschreibung und den Zeichnungen.

Die Erfindung wird nachstehend anhand mehrer in den Zeichnungen dargestellter Ausführungsbeispiele näher beschrieben. Es zeigt
- Fig. 1: in perspektivischer Darstellung einen Spiegelfuß eines erfindungsgemäßen Außenrückblickspiegels mit einer Umfeldleuchte im Schnitt,
- Fig. 2 bis 6: jeweils eine weitere Ausführungsform eines erfindungsgemäßen Außenrückblickspiegels in Darstellungen gemäß Fig. 1.

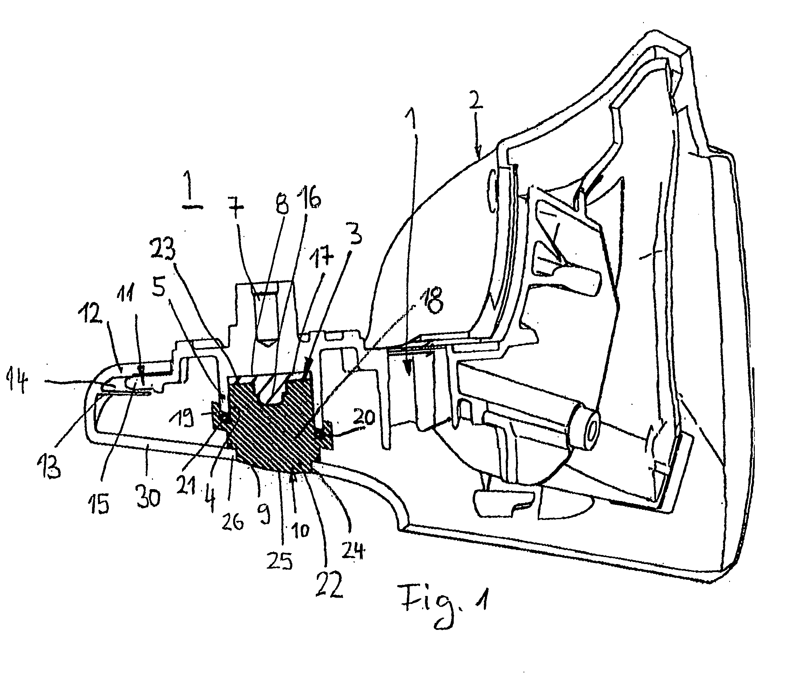

Fig. 1 zeigt einen Spiegelfuß 1 mit einer Abdeckung 2 und einer Umfeldleuchte 3 eines Außenrückblickspiegels, der über den Spiegelfuß 1 an einem (nicht dargestellten) Fahrzeug befestigt ist. Am Spiegelfuß 1 wird ein (nicht dargestellter) Spiegelkopf angelenkt, der aus einer Gebrauchslage in eine Außergebrauchslage benachbart zum Fahrzeug verschwenkt werden kann. Mit der Umfeldleuchte 3 wird ein Bereich unterhalb des Außenrückblickspiegels und benachbart zum Fahrzeug bzw. der Fahrzeugtüre beleuchtet.

Der Spiegelfuß 1 hat eine Aufnahme 4 für die Leuchte 3, die vorzugsweise von einem umlaufenden Steg 5 gebildet wird. Die Aufnahme 4 kann eckigen oder runden Querschnitt haben. Entsprechend der unterschiedlichen Bauhöhe des Spiegelfußes 1 im Bereich des Einbauraumes der Umfeldleuchte 3 hat der Steg 5 über seinen Umfang unterschiedliche Höhe. Im Ausführungsbeispiel liegt die Aufnahme 4 im Bereich einer Bohrung 7, die einen Lagerbolzen zur schwenkbaren Lagerung des Spiegelkopfes aufnimmt.

Der Spiegelfuß 1 hat einen Tragkörper 1', der vorzugsweise aus Metall oder aus hartem Kunststoff besteht. Der Tragkörper 1' ist nach außen durch die kappenartig ausgebildete Abdeckung 2 abgedeckt, die eine Öffnung 9 für ein Lichtfester 10 der Leuchte 3 aufweist. Die Abdeckung 2 besteht vorteilhaft aus Kunststoff. Sie wird über eine oder mehrere Formschlußverbindungen 11 auf dem Tragkörper 1' gehalten. Die Abdeckung hat einen umgebogenen Randabschnitt 12 und einen etwa parallel und mit Abstand dazu liegenden inneren Steg 13, die eine Aufnahmeöffnung 14 für einen freien Rand 15 des Tragkörpers 1' begrenzen.

Die Umfeldleuchte 3 hat als Leuchtmittel eine LED 16, die auf einer Platine 17 angeordnet ist, und ein Leuchtengehäuse 18, das das Lichtfenster 10 aufweist. Die Platine 17 ist eine ebene Kunststoffplatte, die einen (nicht dargestellten) Metallkern, vorzugsweise eine gleiche Umrißform aufweisende Metallplatte als Wärmeleiter enthält. In der Einbaulage liegt die Metallkernplatine 16 flächig auf dem ebenen Boden 8 der Aufnahme 4 auf.

Das Leuchtengehäuse 18 ist einteilig mit dem Lichtfenster 10 aus einem lichtdurchlässigen Kunststoff hergestellt. Das Gehäuse hat kreisförmigen Querschnitt mit einem umlaufenden, im Querschnitt L-förmigen Rand 19, der eine Ringnut 20 für eine Ringdichtung 21 begrenzt. In die Ringnut 20 ragt das freie Ende des Steges 5 der Aufnahme 4 des Tragkörpers 1'. Auf diese Weise ist das Gehäuse 18 in montierter Lage in der Aufnahme 4 gegen Verdrehen gesichert. Die Platine 17 schließt das Gehäuse 18 an dem dem Lichtfenster 10 gegenüberliegenden Ende.

Das Lichtfester 10 ragt mit einem zentralen Abschnitt 22 so in die Gehäuseöffnung 9, daß die Stirnfläche 25 des Abschnittes 22 in der Außenseite der Abdeckung 2 liegt. Der Gehäuseabschnitt 22 füllt die Öffnung 9 vollständig aus und geht über eine Schulter 24 in den übrigen Gehäuseteil über. Die Stirnfläche 25 ist mit großem Krümmungsradius teilkreisförmig nach außen über die anschließende Wand 30 der Abdeckung 2 gewölbt. In montierter Lage der Abdeckung 2 ragt das Lichtfenster 10 in die Öffnung 9 der Abdeckung 2, so daß der Öffnungsrand 26 in der Schulter 24 liegt. Das Leuchtengehäuse 18 liegt benachbart zum Öffnungsrand 26 auf der Innenseite der Abdekkung 2 auf. Die Höhe des Leuchtengehäuses 18 ist geringfügig größer als der Abstand, den die Abdeckung 2 im Bereich des Gehäuses vom Boden 8 der Aufnahme 4 des Tragkörpers 1' hat. Dadurch wird das Leuchtengehäuse 18 in montierter Lage und bei montierter Abdeckung 2 gegenüber der Platine 17 vorgespannt, so daß diese unter Vorspannung am Boden 8 der Spiegelfußaufnahme 4 anliegt. Da die LED 16 sehr hohe Lumenwerte pro Watt erzeugt, tritt eine starke Wärmeentwicklung auf, die über den Metallkern in der Platine 17 unmittelbar auf den Tragkörper 1' übertragen bzw. an diesen abgeleitet wird. Auf diese Weise wird die Umfeldleuchte 3 bzw. ihr Gehäuse 18 vor übermäßiger Erwärmung oder vor Überhitzen geschützt.

Die Abdeckung 2 wird über das vormontierte Lichtfenster 10 geschoben. Dabei gleitet die Abdeckung 2 unter elastischer Aufweitung auf der Stirnfläche 25 des Lichtfensters 10, bis der Öffnungsrand 26 in die Schulter 24 des Lichtfensters einschnappt. Auf diese Weise wird das Lichtfenster 10 gegen den Träger 17 verspannt und gehalten. Zusätzliche Befestigungsmittel für das Lichtfenster 10 sind somit nicht notwendig.

Durch die Vorspannung des Leuchtengehäuses 18 wird auch die Dichtung 21 zwischen dem Steg 5 und dem Gehäuse 18 elastisch zusammengedrückt, so daß zuverlässig das Eindringen von Feuchtigkeit in das Gehäuse 18 verhindert wird.

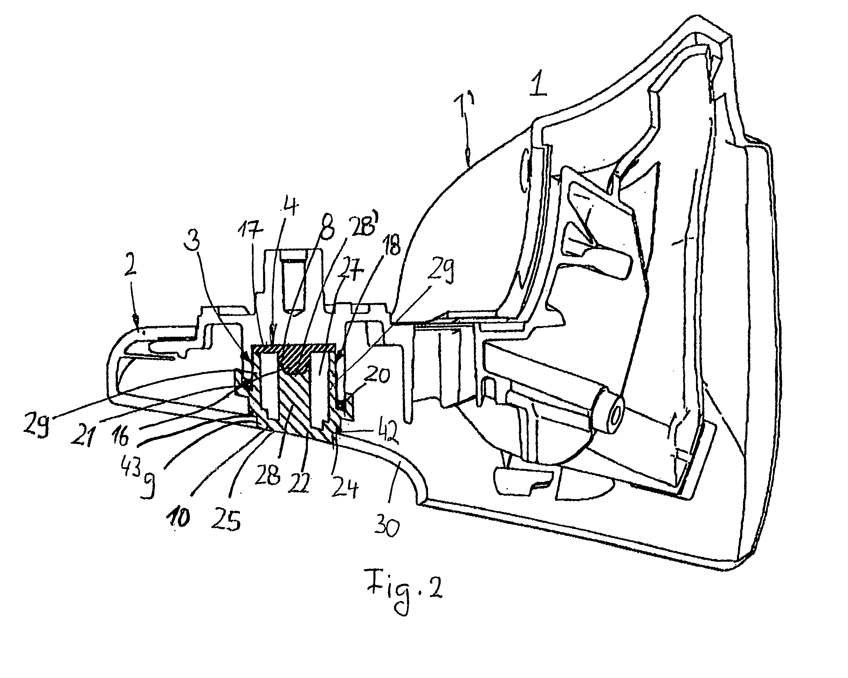

Die Ausführungsform gemäß Fig. 2 unterscheidet sich von der zuvor beschriebenen Ausführungsform nur dadurch, daß das Leuchtengehäuse 18 einen vorzugsweise ringförmigen Hohlraum 27 aufweist, der zwischen den Gehäusewänden 29, 29' und einem zentralen Mittelteil 28 vorgesehen ist. Dieser Mittelteil 28 weist an seinem freien Ende eine Ausnehmung 28' auf, in die bei montiertem Leuchtengehäuse 18 die LED 16 formschlüssig ragt. Das Lichtfenster 10 hat den zentralen, vorstehenden Gehäuseabschnitt 22, der in der Öffnung 9 liegt. Die Stirnseite 25 des zentralen Gehäuseabschnittes 22 ist im Unterschied zur zuvor beschriebenen Ausführungsform konvex gekrümmt ausgebildet, so daß sie etwa in einer Ebene mit der angrenzenden Wand 30 der Abdeckung 2 liegt. Auch bei dieser Ausführungsform besteht das Leuchtengehäuse 18 aus lichtdurchlässigem Kunststoff.

Das Gehäuse 18 weist unmittelbar an die Außenschulter 24 anschließend eine weitere Außenschulter 43 auf, in der eine Ringdichtung 42 angeordnet ist. In der Einbaulage liegt sie unter elastischer Verformung zwischen dem Leuchtengehäuse 18 und der Innenseite der Abdeckung 2 und verhindert den Zutritt von Feuchtigkeit und/oder Schmutz durch die Öffnung 9 in den Spiegelfuß 1. Im übrigen ist diese Ausführungsform gleich ausgebildet wie das vorige Ausführungsbeispiel. Die Metallkernplatine 17 wird wiederum fest gegen den Boden 8 der Aufnahme 4 des Tragkörpers 1' gedrückt, so daß die bei eingeschalteter LED 16 entstehende Wärme zuverlässig in den Tragkörper 1' geleitet wird.

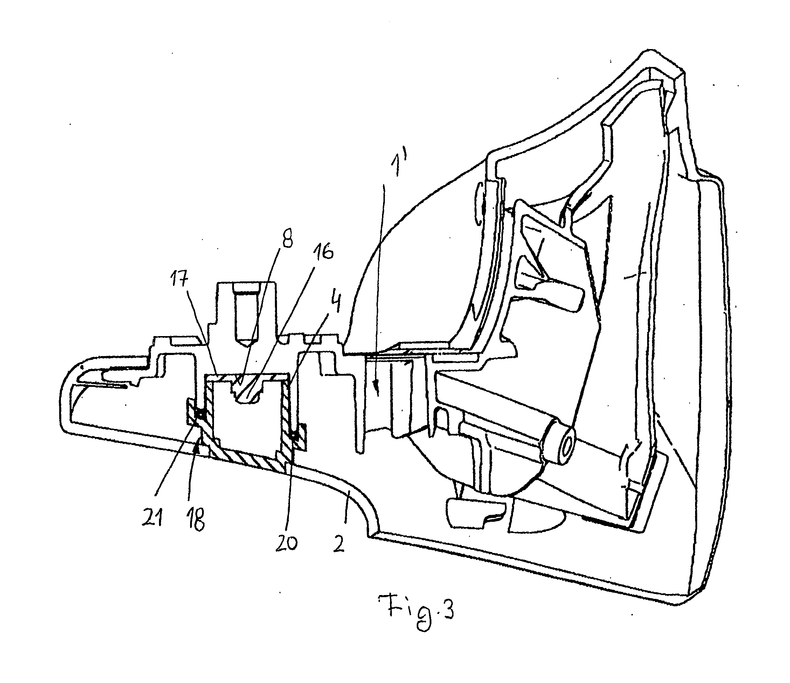

Die Ausführungsform nach Fig. 3 entspricht der nach Fig. 2 mit dem einzigen Unterschied, daß das Leuchtengehäuse 18 ohne den Mittelteil 28 ausgebildet ist. Die LED 16 mit der den Metallkern aufweisenden Platine 17 liegt wieder auf dem Boden 8 der Aufnahme 4 des Tragkörpers 1' unter Druck ganzflächig auf. Das Gehäuse 18 ist in montierter Lage gemäß Fig. 3 durch die Abdeckung 2 in Richtung auf den Tragkörper 1' belastet. Dadurch wird die Ringdichtung 21 in der Ringnut 20 elastisch verformt und die Platine 17 gegen den Boden 8 der Aufnahme 4 gedrückt, so daß eine schnelle und einwandfreie Wärmeableitung und eine zuverlässige Abdichtung des Gehäuses 18 gewährleistet sind.

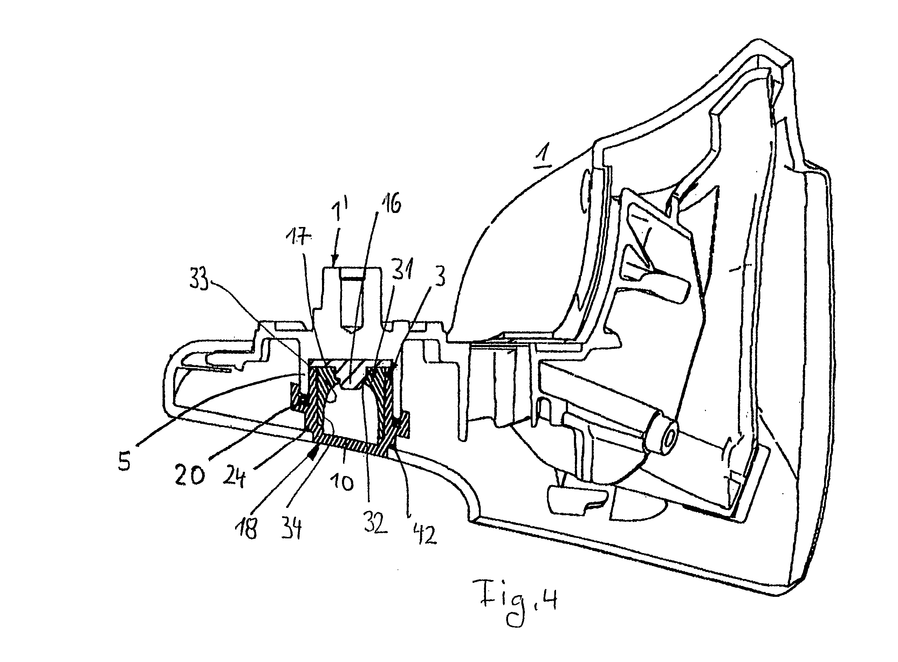

Fig. 4 zeigt eine Ausführungsform entsprechend Fig. 3, wobei das Gehäuse 18 als Einsatz 31 einen Reflektor aufweist. Er liegt an der Innenwand des Gehäuses 18 an und ist mit einer Öffnung 32 versehen, durch welche die LED 16 ragt. Der Reflektor 31 hat eine Reflektorfläche 33, daß das von der LED 16 ausgesandte Licht zum Lichtfenster 10 reflektiert. Der Reflektor 31 kann je nach gewünschter Leuchtwirkung unterschiedlich gestaltet sein, beispielsweise als Paraboloid. Mit seinem freien Rand stützt sich der Reflektor 31 an einer Innenschulter 34 des Gehäuses 18 ab, die auch bei den Gehäusen gemäß den Fig. 2 und 3 vorgesehen ist. Die Innenschulter 34 ist gegenüber der Außenschulter 24 nach innen zurückversetzt. Der Reflektor 31 liegt außerdem auf der Platine 17 auf. Der Reflektor 31 besteht vorzugsweise aus hitzebeständigem Kunststoff. Im übrigen ist die Umfeldleuchte 3 gleich ausgebildet wie die bei der Ausführungsform gemäß Fig. 3.

Der Reflektor 31 kann auch als wärmeableitendes Element ausgebildet sein. In diesem Falle besteht er aus metallischem Werkstoff und ist so ausgebildet, daß er die Form des Leuchtengehäuses 18 hat. Die Ringnut 20 ist dann an der Außenseite des Reflektors 31 vorgesehen. In das freie Ende eines solchen Reflektors ist dann eine Lichtscheibe eingesetzt. Die von der LED 16 erzeugte Wärme wird bei einer solchen Ausbildung nicht nur über den Träger 17 in den Tragkörper 1', sondern auch über den Reflektor 31 in den Steg 5 abgeleitet.

Über die Platine 17 der Umfeldleuchte 3 wird auch hier die von der LED 16 erzeugte Wärme schnell und vollständig in den Tragkörper 1' abgeleitet.

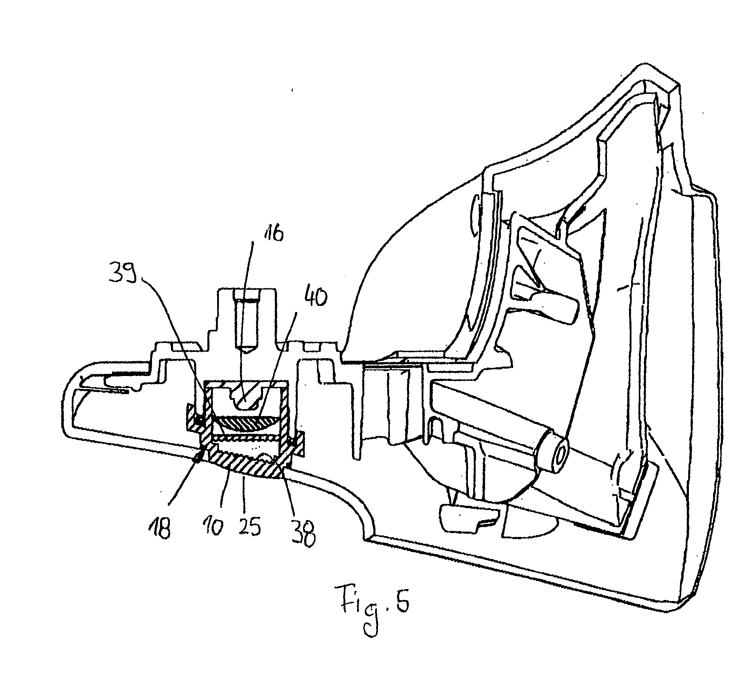

Fig. 5 zeigt eine Ausführungsform, bei der das Leuchtengehäuse 18 im wesentlichen dem nach Fig. 3 entspricht. Nur die Stirnfläche 25 des zentralen Abschnittes 22 des Lichtfensters 10 ist entsprechend der Ausführungsform nach Fig. 1 konkav gewölbt. Die Innenseite des Lichtfensters 10 ist mit einer Optikstruktur 38 versehen, mit der eine gezielte Lenkung des von der LED 16 abgestrahlten Lichtes erreicht werden kann. Mit Abstand hinter dem Lichtfenster 10 ist ein Optikelement 39 angeordnet, das beispielsweise als Fresnellinse ausgebildet ist. Zwischen dem Optikelement 39 und der LED 16 ist eine Linse 40 im Gehäuse 18 untergebracht. Die Optikelemente 38 bis 40 können selbstverständlich auch in anderer Anordnung im Gehäuse eingebaut sein. Es können auch unterschiedliche Kombinationen dieser Optikelemente eingesetzt werden, um eine gezielte Lenkung des Lichtes zu erreichen.

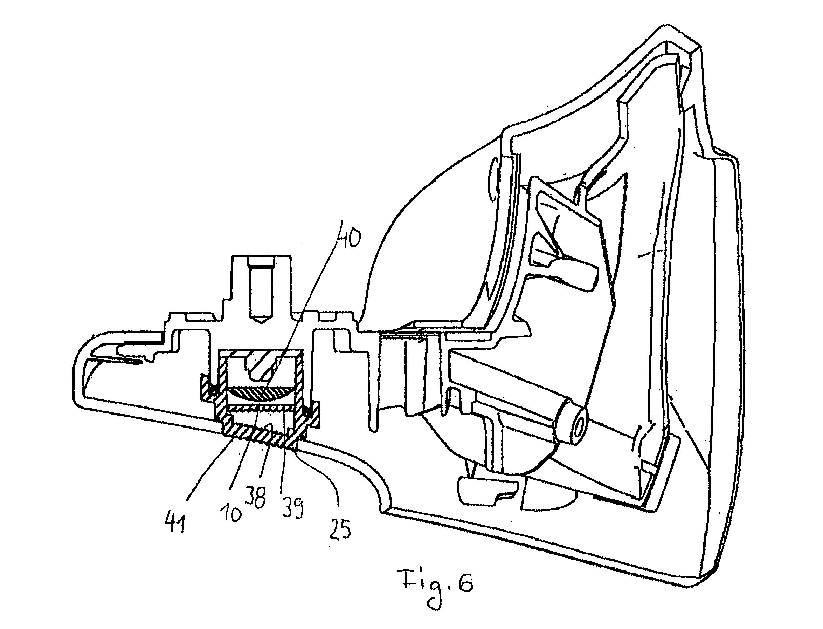

Bei der Ausführungsform nach Fig. 6 sind wie beim vorigen Ausführungsbeispiel die Optikelemente 38 bis 40 vorgesehen. Zusätzlich ist die Stirnseite 25 des Lichtfensters 10 mit einer Optikstruktur 41 versehen.

Anstelle des Leuchtengehäuses 18 kann auch ein Lichtleiter verwendet werden oder eine Kombination aus einem Lichtleiter und dem Gehäuse 18. Die Einbautiefe der LED 16 kann bei entsprechender Anpassung des Spiegelfußes ebenfalls variiert werden; um das Leuchtfeld zu verändern.

Schließlich kann auch die Lage der Umfeldbeleuchtung 3 auf dem Spiegelfuß 1 je nachdem, welcher Bereich neben dem Fahrzeug und am Boden ausgeleuchtet werden soll, beliebig verändert werden.

Selbstverständlich können anstelle der einen LED 16 auch weitere, beispielsweise in Reihe nebeneinander angeordnete LEDs vorgesehen werden, um die Lichtintensität zu erhöhen.

Bei allen beschriebenen Ausführungsformen können im Außenrückblickspiegel, insbesondere im Spiegelkopf, Leuchtmittel als Wiederholblinkleuchte, Sender und/oder Empfänger von Garagentoröffnern, und/oder von Navigationssystemen, Sensoren als Teil der Steuerung eines EC- oder eines LCD-Glases, Antennen für Autoradios, Kompaß und dgl., Lautsprecher und dgl. eingebaut sein. Auch im Spiegelfuß können weitere Bauteile vorgesehen sein, wie Sender und/oder Empfänger von Garagentoröffnern oder von Navigationssystemen.

## Patentansprüche

1. Außenrückblickspiegel für Fahrzeuge, insbesondere Kraftfahrzeuge, mit einem am Fahrzeug zu befestigenden Spiegelfuß (1), an dem ein abklappbarer Spiegelkopf befestigt ist, und mit mindestens einer im Spiegelfuß (1) angeordneten Umfeldleuchte (3) mit mindestens einem Leuchtmittel (16), vorzugsweise einer LED, das auf einem Träger (17) angeordnet ist,
**dadurch gekennzeichnet, daß** der Träger (17) einen metallischen Wärmeleiter enthält, der zur Wärmeableitung unmittelbar an einem wärmeableitenden Tragkörper (1') des Spiegelfußes (1) anliegt.

2. Außenrückblickspiegel nach Anspruch 1,
**dadurch gekennzeichnet, daß** der Wärmeleiter plattenartig ausgebildet ist.

3. Außenrückblickspiegel nach Anspruch 1 oder 2,
**dadurch gekennzeichnet, daß** der Wärmeleiter versenkt im Träger (17) angeordnet ist, der vorzugsweise durch eine Leiterplatine gebildet ist.

4. Außenrückblickspiegel nach einem der Ansprüche 1 bis 3,
**dadurch gekennzeichnet, daß** das Leuchtmittel (16) mit dem Träger (17) eine Baueinheit bildet.

5. Außenrückblickspiegel nach einem der Ansprüche 1 bis 4,
**dadurch gekennzeichnet, daß** auf dem Träger (17) ein das Leuchtmittel (16) aufnehmendes Leuchtengehäuse (18) angeordnet ist.

6. Außenrückblickspiegel nach Anspruch 5,
**dadurch gekennzeichnet, daß** das Leuchtengehäuse (18) ein Lichtfenster (10) aufweist.

7. Außenrückblickspiegel nach Anspruch 5 oder 6,
**dadurch gekennzeichnet, daß** das Leuchtengehäuse (18) aus hitzebeständigem Material, vorzugsweise Kunststoff, besteht.

8. Außenrückblickspiegel nach einem der Ansprüche 5 bis 7,
**dadurch gekennzeichnet, daß** das Leuchtengehäuse (18) und das Lichtfenster (10) einteilig ausgebildet sind.

9. Außenrückblickspiegel, insbesondere nach einem der Ansprüche 5 bis 8,
**dadurch gekennzeichnet, daß** das Leuchtengehäuse (18) gegenüber dem Träger (17) in montierter Lage derart vorgespannt ist, daß der Wärmeleiter des Trägers (17) unter Vorspannung an den Teilen des Spiegelfußes (1) anliegt.

10. Außenrückblickspiegel nach einem der Ansprüche 5 bis 9,
**dadurch gekennzeichnet, daß** das Leuchtengehäuse (18) unter Zwischenlage mindestens einer Dichtung (21) am Spiegelfuß (1) anliegt.

11. Außenrückblickspiegel nach Anspruch 10,
**dadurch gekennzeichnet, daß** die Dichtung (21) eine Ringdichtung ist.

12. Außenrückblickspiegel nach Anspruch 10 oder 11,
**dadurch gekennzeichnet, daß** die Dichtung (21) in einer Ringnut (20) liegt.

13. Außenrückblickspiegel nach einem der Ansprüche 5 bis 12,
**dadurch gekennzeichnet, daß** das Leuchtengehäuse (18) verdrehsicher im Spiegelfuß (1) gehalten ist.

14. Außenrückblickspiegel, insbesondere nach einem der Ansprüche 5 bis 13,
**dadurch gekennzeichnet, daß** das Leuchtengehäuse (18) durch eine Abdeckung (2) des Spiegelfußes (1) gegen den Träger (17) derart verspannt ist, daß der Wärmeleiter des Trägers (17) unter Vorspannung an den Teilen des Spiegelfußes (1) anliegt.

15. Außenrückblickspiegel nach Anspruch 14,
**dadurch gekennzeichnet, daß** die Abdeckung (2) an dem Tragkörper (1') des Spiegelfußes (1) über eine Rastverbindung, vorzugsweise eine Schnappverbindung, gehalten ist.

16. Außenrückblickspiegel nach Anspruch 14 oder 15,
**dadurch gekennzeichnet, daß** zwischen der Abdeckung (2) und dem Leuchtengehäuse (18) eine weitere Dichtung (42) angeordnet ist.

17. Außenrückblickspiegel nach einem der Ansprüche 6 bis 16,
**dadurch gekennzeichnet, daß** das Lichtfenster (10) über eine Außenschulter (24) in den übrigen Gehäuseteil übergeht.

18. Außenrückblickspiegel nach Anspruch 17,
**dadurch gekennzeichnet, daß** die Abdeckung (2) mit einem Rand (26) in die Außenschulter (24) des Leuchtengehäuses (18) eingreift.

19. Außenrückblickspiegel nach einem der Ansprüche 16 bis 18,
**dadurch gekennzeichnet, daß** die weitere Dichtung (42) in einer weiteren Außenschulter (43) des Leuchtengehäuses (18) liegt.

20. Außenrückblickspiegel nach einem der Ansprüche 14 bis 19,
**dadurch gekennzeichnet, daß** das Leuchtengehäuse (18) an der Innenseite der Abdeckung (2) abgestützt ist.

21. Außenrückblickspiegel nach einem der Ansprüche 5 bis 20,
**dadurch gekennzeichnet, daß** das Leuchtengehäuse (18) an seiner vom Lichtfenster (10) abgewandten Rückseite eine Vertiefung (28') aufweist, in die das Leuchtmittel (16) bei montiertem Leuchtengehäuse ragt.

22. Außenrückblickspiegel nach einem der Ansprüche 5 bis 21,
**dadurch gekennzeichnet, daß** das Leuchtengehäuse (18) napfförmig ausgebildet ist.

23. Außenrückblickspiegel nach einem der Ansprüche 5 bis 22,
**dadurch gekennzeichnet, daß** das Leuchtengehäuse (18) einen Mittelteil (28) aufweist.

24. Außenrückblickspiegel nach Anspruch 23,
**dadurch gekennzeichnet, daß** der Mittelteil (28) die Vertiefung (28') zur Aufnahme des Leuchtmittels (16) aufweist.

25. Außenrückblickspiegel nach einem der Ansprüche 5 bis 24,
**dadurch gekennzeichnet, daß** im Leuchtengehäuse (18) ein Reflektor (31) untergebracht ist.

26. Außenrückblickspiegel nach Anspruch 25,
**dadurch gekennzeichnet, daß** das Leuchtmittel (16) in den Reflektor (31) ragt.

27. Außenrückblickspiegel nach Anspruch 25 oder 26,
**dadurch gekennzeichnet, daß** der Reflektor (31) auf dem Träger (17) aufsitzt.

28. Außenrückblickspiegel nach einem der Ansprüche 25 bis 27,
**dadurch gekennzeichnet, daß** sich der Reflektor (31) an einer Innenschulter (34) des Leuchtengehäuses (18) abstützt.

29. Außenrückblickspiegel nach einem der Ansprüche 25 bis 28,
**dadurch gekennzeichnet, daß** der Reflektor (31) aus hitzebeständigem Material, vorzugsweise Kunststoff, besteht.

30. Außenrückblickspiegel nach einem der Ansprüche 25 bis 29,
**dadurch gekennzeichnet, daß** der Reflektor (31) aus wärmeableitendem Material, vorzugsweise Metall, besteht.

31. Außenrückblickspiegel nach Anspruch 30,
**dadurch gekennzeichnet, daß** der Reflektor (31) einen Teil des Leuchtengehäuses (8) bildet.

32. Außenrückblickspiegel nach einem der Ansprüche 5 bis 31,
**dadurch gekennzeichnet, daß** das Leuchtengehäuse (18) mindestens ein, vorzugsweise mehrere Optikelemente (38 bis 41) aufweist.

33. Außenrückblickspiegel nach einem der Ansprüche 6 bis 32,
**dadurch gekennzeichnet, daß** das Lichtfenster (10) in einer Öffnung (9) des Spiegelfußes (1), insbesondere der Abdeckung (2), liegt.

34. Außenrückblickspiegel nach einem der Ansprüche 6 bis 33,
**dadurch gekennzeichnet, daß** die Stirnseite (22) des Lichtfensters (10) im wesentlichen eine Fortsetzung der Außenseite der Abdeckung (2) bildet.

35. Außenrückblickspiegel nach einem der Ansprüche 15 bis 34,
**dadurch gekennzeichnet, daß** der Tragkörper (1') des Spiegelfußes (1) eine Aufnahme (4) für das Leuchtengehäuse (18) aufweist.

36. Außenrückblickspiegel nach Anspruch 35,
**dadurch gekennzeichnet, daß** die Aufnahme (4) durch Stege (5, 6) des Tragkörpers (1') begrenzt ist.

37. Außenrückblickspiegel nach Anspruch 35 oder 36,
**dadurch gekennzeichnet, daß** der Träger (17) unter Druckbelastung durch das Leuchtengehäuse (18) am Boden (8) der Aufnahme (4) flächig anliegt.

## Claims

1. Exterior rearview mirror for vehicles, in particular motor vehicles, with a mirror base (1) which is to be fastened to the vehicle and to which a mirror head which can be folded down is fastened, and with at least one background light fitting (3) which is arranged in the mirror base (1) and has at least one lamp (16), preferably an LED, which is arranged on a support (17), **characterized in that** the support (17) contains a metallic heat conductor which bears directly against a heat-dissipating supporting body (1') of the mirror base (1) in order to dissipate the heat.

2. Exterior rearview mirror according to Claim 1, **characterized in that** the heat conductor is of platelike design.

3. Exterior rearview mirror according to Claim 1 or 2, **characterized in that** the heat conductor is arranged in a recessed manner in the support (17) which is preferably formed by a printed circuit board.

4. Exterior rearview mirror according to one of Claims 1 to 3, **characterized in that** the lamp (16) forms a constructional unit together with the support (17).

5. Exterior rearview mirror according to one of Claims 1 to 4, **characterized in that** a lamp housing (18) receiving the lamp (16) is arranged on the support (17).

6. Exterior rearview mirror according to Claim 5, **characterized in that** the lamp housing (18) has a light window (10).

7. Exterior rearview mirror according to Claim 5 or 6, **characterized in that** the lamp housing (18) is composed of heat-resistant material, preferably plastic.

8. Exterior rearview mirror according to one of Claims 5 to 7, **characterized in that** the lamp housing (18) and the light window (10) are of single-part design.

9. Exterior rearview mirror, in particular according to one of Claims 5 to 8, **characterized in that**, in the fitted position, the lamp housing (18) is prestressed in relation to the support (17) in such a manner that the heat conductor of the support (17) bears under prestress against the parts of the mirror base (1).

10. Exterior rearview mirror according to one of Claims 5 to 9, **characterized in that** the lamp housing (18) bears with the interposition of at least one seal (21) against the mirror base (1).

11. Exterior rearview mirror according to Claim 10, **characterized in that** the seal (21) is an annular seal.

12. Exterior rearview mirror according to Claim 10 or 11, **characterized in that** the seal (21) is situated in an annular groove (20).

13. Exterior rearview mirror according to one of Claims 5 to 12, **characterized in that** the lamp housing (18) is held in the mirror base (1) in a manner secure against rotation.

14. Exterior rearview mirror, in particular according to one of Claims 5 to 13, **characterized in that** the lamp housing (18) is prestressed against the support (17) by a covering (2) of the mirror base (1) in such a manner that the heat conductor of the support (17) bears under prestress against the parts of the mirror base (1).

15. Exterior rearview mirror according to Claim 14, **characterized in that** the covering (2) is held on the supporting body (1') of the mirror base (1) via a latching connection, preferably a snap connection.

16. Exterior rearview mirror according to Claim 14 or 15, **characterized in that** a further seal (42) is arranged between the covering (2) and the lamp housing (18).

17. Exterior rearview mirror according to one of Claims 6 to 16, **characterized in that** the light window (10) merges into the rest of the housing part via an external shoulder (24).

18. Exterior rearview mirror according to Claim 17, **characterized in that** the cover (2) engages by means of an edge (26) in the exterior shoulder (24) of the lamp housing (18).

19. Exterior rearview mirror according to one of Claims 16 to 18, **characterized in that** the further seal (42) is situated in a further exterior shoulder (43) of the lamp housing (18).

20. Exterior rearview mirror according to one of Claims 14 to 19, **characterized in that** the lamp housing (18) is supported on the inside of the covering (2).

21. Exterior rearview mirror according to one of Claims 5 to 20, **characterized in that**, on its rear side facing away from the light window (10), the lamp housing (18) has a depression (28') into which the lamp (16) protrudes when the lamp housing is fitted.

22. Exterior rearview mirror according to one of Claims 5 to 21, **characterized in that** the lamp housing (18) is of cup-shape design.

23. Exterior rearview mirror according to one of Claims 5 to 22, **characterized in that** the lamp housing (18) has a central part (28).

24. Exterior rearview mirror according to Claim 23, **characterized in that** the central part (28) has the depression (28') for receiving the lamp (16).

25. Exterior rearview mirror according to one of Claims 5 to 24, **characterized in that** a reflector (31) is accommodated in the lamp housing (18).

26. Exterior rearview mirror according to Claim 25, **characterized in that** the lamp (16) protrudes into the reflector (31).

27. Exterior rearview mirror according to Claim 25 or 26, **characterized in that** the reflector (31) sits on the support (17).

28. Exterior rearview mirror according to one of Claims 25 to 27, **characterized in that** the reflector (31) is supported on an inner shoulder (34) of the lamp housing (18).

29. Exterior rearview mirror according to one of Claims 25 to 28, **characterized in that** the reflector (31) is composed of heat-resistant material, preferably plastic.

30. Exterior rearview mirror according to one of Claims 25 to 29, **characterized in that** the reflector (31) is composed of heat-dissipating material, preferably metal.

31. Exterior rearview mirror according to Claim 30, **characterized in that** the reflector (31) forms part of the lamp housing (8).

32. Exterior rearview mirror according to one of Claims 5 to 31, **characterized in that** the lamp housing (18) has at least one, preferably more, optical elements (38 to 41).

33. Exterior rearview mirror according to one of Claims 6 to 32, **characterized in that** the light window (10) is situated in an opening (9) of the mirror base (1), in particular of the covering (2).

34. Exterior rearview mirror according to one of Claims 6 to 33, **characterized in that** the end side (22) of the light window (10) essentially forms a continuation of the outside of the covering (2).

35. Exterior rearview mirror according to one of Claims 15 to 34, **characterized in that** the supporting body (1') of the mirror base (1) has a receptacle (4) for the lamp housing (18).

36. Exterior rearview mirror according to Claim 35, **characterized in that** the receptacle (4) is bounded by webs (5, 6) of the supporting body (1').

37. Exterior rearview mirror according to Claim 35 or 36, **characterized in that** the support (17) bears flat against the base (8) of the receptacle (4) under pressure loading by the lamp housing (18).

## Revendications

1. Rétroviseur extérieur pour véhicule, en particulier pour véhicule automobile, comportant un pied (1) à fixer sur le véhicule et sur lequel est fixée une tête rabattable, et comportant au moins un feu d'environnement (3) agencé dans le pied (1) et pourvu d'au moins un moyen lumineux (16), de préférence une diode électroluminescente, qui est agencé sur un support (17),
**caractérisé en ce que** le support (17) comprend un conducteur de chaleur métallique qui, dans le but de la dissipation de chaleur, prend appui directement contre un corps porteur (1'), dissipateur de chaleur, du pied (1).

2. Rétroviseur extérieur selon la revendication 1,
**caractérisé en ce que** le conducteur de chaleur est réalisé en forme de plaque.

3. Rétroviseur extérieur selon la revendication 1 ou 2,
**caractérisé en ce que** le conducteur de chaleur est agencé en renfoncement dans le support (17) qui est constitué de préférence par une carte à circuits imprimés.

4. Rétroviseur extérieur selon l'une des revendications 1 à 3,
**caractérisé en ce que** le moyen lumineux (16) forme une unité structurelle avec le support (17).

5. Rétroviseur extérieur selon l'une des revendications 1 à 4,
**caractérisé en ce que** sur le support (17) est agencé un boîtier de feu (18) recevant le moyen lumineux (16).

6. Rétroviseur extérieur selon la revendication 5,
**caractérisé en ce que** le boîtier de feu (18) présente une fenêtre à lumière (10).

7. Rétroviseur extérieur selon la revendication 5 ou 6,
**caractérisé en ce que** le boîtier de feu (18) est constitué d'un matériau résistant à la chaleur, de préférence de matière plastique.

8. Rétroviseur extérieur selon l'une des revendications 5 à 7,
**caractérisé en ce que** le boîtier de feu (18) et la fenêtre à lumière (10) sont réalisés d'un seul tenant.

9. Rétroviseur extérieur en particulier selon l'une des revendications 5 à 8,
**caractérisé en ce que** le boîtier de feu (18) est précontraint par rapport au support (17) dans la position montée, de telle sorte que le conducteur de chaleur du support (17) prend appui sous précontrainte contre les éléments du pied (1).

10. Rétroviseur extérieur selon l'une des revendications 5 à 9,
**caractérisé en ce que** le boîtier de feu (18) prend appui contre le pied (1) avec interposition d'au moins un joint d'étanchéité (21).

11. Rétroviseur extérieur selon la revendication 10,
**caractérisé en ce que** le joint (21) est un joint annulaire.

12. Rétroviseur extérieur selon la revendication 10 ou 11,
**caractérisé en ce que** le joint (21) se trouve dans une gorge annulaire (20).

13. Rétroviseur extérieur selon l'une des revendications 5 à 12,
**caractérisé en ce que** le boîtier de feu (18) est retenu avec blocage anti-rotation dans le pied (1).

14. Rétroviseur extérieur en particulier selon l'une des revendications 5 à 13,
**caractérisé en ce que** le boîtier de feu (18) est contraint contre le support (17) par un recouvrement (2) du pied (1), de telle sorte que le conducteur de chaleur du support (17) prend appui sous précontrainte contre les éléments du pied (1).

15. Rétroviseur extérieur selon la revendication 14,
**caractérisé en ce que** le recouvrement (2) est retenu sur le corps porteur (1') du pied (1) par l'intermédiaire d'une liaison à enclenchement, de préférence une liaison à encliquetage.

16. Rétroviseur extérieur selon la revendication 14 ou 15,
**caractérisé en ce qu'**un autre joint d'étanchéité (42) est agencé entre le recouvrement (2) et le boîtier de feu (18).

17. Rétroviseur extérieur selon l'une des revendications 6 à 16,
**caractérisé en ce que** la fenêtre à lumière (10) se transforme en la partie de boîtier restante via un épaulement extérieur (24).

18. Rétroviseur extérieur selon la revendication 17,
**caractérisé en ce que** le recouvrement (2) s'engage par une bordure (26) dans l'épaulement extérieur (24) du boîtier de feu (18).

19. Rétroviseur extérieur selon l'une des revendications 16 à 18,
**caractérisé en ce que** l'autre joint (42) se trouve dans un autre épaulement extérieur (43) du boîtier de feu (18).

20. Rétroviseur extérieur selon l'une des revendications 14 à 19,
**caractérisé en ce que** le boîtier de feu (18) est supporté sur le côté intérieur du recouvrement (2).

21. Rétroviseur extérieur selon l'une des revendications 5 à 20,
**caractérisé en ce que** le boîtier de feu (18) présente un renfoncement (28') sur son côté postérieur détourné de la fenêtre à lumière (10), renfoncement dans lequel pénètre le moyen lumineux (16) dans l'état monté du boîtier de feu.

22. Rétroviseur extérieur selon l'une des revendications 5 à 21,
**caractérisé en ce que** le boîtier de feu (18) est réalisé en forme de godet.

23. Rétroviseur extérieur selon l'une des revendications 5 à 22,
**caractérisé en ce que** le boîtier de feu (18) comprend une partie médiane (28).

24. Rétroviseur extérieur selon la revendication 23,
**caractérisé en ce que** la partie médiane (28) présente le renfoncement (28') pour recevoir le moyen lumineux (16).

25. Rétroviseur extérieur selon l'une des revendications 5 à 24,
**caractérisé en ce qu'**un réflecteur (31) est logé dans le boîtier de feu (18).

26. Rétroviseur extérieur selon la revendication 25,
**caractérisé en ce que** le moyen lumineux (16) pénètre dans le réflecteur (31).

27. Rétroviseur extérieur selon la revendication 25 ou 26,
**caractérisé en ce que** le réflecteur (31) repose sur le support (17).

28. Rétroviseur extérieur selon l'une des revendications 25 à 27,
**caractérisé en ce que** le réflecteur (31) prend appui sur un épaulement intérieur (34) du boîtier de feu (18).

29. Rétroviseur extérieur selon l'une des revendications 25 à 28,
**caractérisé en ce que** le réflecteur (31) est constitué d'un matériau résistant à la chaleur, de préférence de matière plastique.

30. Rétroviseur extérieur selon l'une des revendications 25 à 29,
**caractérisé en ce que** le réflecteur (31) est constitué d'un matériau dissipateur de chaleur, de préférence de métal.

31. Rétroviseur extérieur selon la revendication 30,
**caractérisé en ce que** le réflecteur (31) constitue une partie du boîtier de feu (8).

32. Rétroviseur extérieur selon l'une des revendications 5 à 31,
**caractérisé en ce que** le boîtier de feu (18) comprend au moins un, de préférence plusieurs éléments optiques (38 à 41).

33. Rétroviseur extérieur selon l'une des revendications 6 à 32,
**caractérisé en ce que** la fenêtre à lumière (10) se trouve dans une ouverture (9) du pied (1), en particulier du recouvrement (2).

34. Rétroviseur extérieur selon l'une des revendications 6 à 33,
**caractérisé en ce que** le côté frontal (22) de la fenêtre à lumière (10) constitue sensiblement un prolongement du côté extérieur du recouvrement (2).

35. Rétroviseur extérieur selon l'une des revendications 15 à 34,
**caractérisé en ce que** le corps porteur (1') du pied (1) présente un logement (4) pour le boîtier de feu (18).

36. Rétroviseur extérieur selon la revendication 35,
**caractérisé en ce que** le logement (4) est limité par des barrettes (5, 6) du corps porteur (1').

37. Rétroviseur extérieur selon la revendication 35 ou 36,
**caractérisé en ce que** le support (17) prend appui par sa surface contre le fond (8) du logement (4) en étant chargé en pression par le boîtier de feu (18).
